# EUROPEAN PATENT SPECIFICATION

(11) **EP 2 453 756 B1**
(45) Date of publication and mention of the grant of the patent: **20.06.2018**
(21) Application number: 10747320.9
(22) Date of filing: 12.07.2010
(51) Int. Cl.: A23G 1/00

(54) **"PROCESS FOR THE PRODUCTION OF CHOCOLATE"**
VERFAHREN ZUR HERSTELLUNG VON SCHOKOLADE
PROCÉDÉ POUR LA PRODUCTION DE CHOCOLAT

(30) Priority: 13.07.2009 IT MI20091242
(43) Date of publication of application: 23.05.2012
(73) Proprietor: Soremartec S.A., 2632 Findel (LU)
(72) Inventor: Lico, Franco, 21050 Cuasso al Monte (VA) (IT)
(74) Representative: Franzolin, Luigi
(86) International application number: PCT/IT2010/000308
(87) International publication number: WO 2011/007379

(56) References cited:
- WO-A1-2005/077197
- WO-A2-2009/068999
- GB-A- 413 816
- GB-A- 757 110
- GB-A- 1 219 996
- US-A- 4 084 011
- US-A- 4 308 288
- SIMON E J: "ZERKLEINERUNG BEI DER SCHOKOLADEN-HERSTELLUNG - GETRENNTE ODER GEMEINSAME VERMAHLUNG?", REVUE INTERNATIONALE DE LA CHOCOLATERIE, ZUERICH, CH, vol. 24, no. 4, 1 April 1969 (1969-04-01), pages 140-155, XP001113163, ISSN: 0035-3345
- BECKETT S T ED - BECKETT S T: "Industrial Chocolate Manufacture and Use", 1 January 1987 (1987-01-01), INDUSTRIAL CHOCOLATE MANUFACTURE AND USE, LONDON, BLACKIE, GB, PAGE(S) 338 - 341, XP002064196, * the whole document *

## Description

The present invention relates to a method for manufacturing chocolate. The present invention is classifiable within the industrial sector of food production and in particular relates to the industrial sector of chocolate manufacture. WO2009/068999 discloses a process for producing a chocolate or chocolate-like product. The components comprise a sugar and wherein the sugar is ground before being mixed with other components, the particles having a size of 150 µm or less, preferably of 100 µm or less, more preferably 20 µm or less.

GB 1219996 discloses a process for producing heat resistant chocolate or confectionery products, which comprises adding a finely-ground amorphous sugar to a conched chocolate. The amorphous sugar is finely ground, preferably to a particle size not exceeding 15 to 20 µm. The grinding operations are carried out in a room in which the temperature kept constant at 20 ±5°C.

GB757110 discloses a method of manufacturing chocolate by kneading and mixing the constituent materials comprising a first process wherein the constituent materials are ground. The sugar used has a particle size not exceeding 25 µm.

WO2005/077197 discloses a process for manufacturing chocolate mass, comprising the following steps: a) dry pre-grinding of the raw material received in its original dry form until a desired thickness following through a mechanized transportation to the next stage; ) conching of the pre-grinding product with the desired thickness; c) liquefying and cooling the chocolate mass; d) chocolate mass final grinding, the chocolate mass already refined being transported from the refining mill to a stock tank and, in its final state of use, waits for the adequate solidification moment. A sugar ground powder of 10-200 µm thickness is used. As is known, the first step in the industrial manufacture of chocolate is generally a mixing step where the cocoa paste, obtained from the processing of cocoa beans, is suitably mixed with other ingredients such as cocoa butter, sugar, milk or powder milk, vanilla and/or other ingredients not specified. Further additional ingredients, such as lecithin or the like may also be added, these acting an as emulsifying agent favouring greater homogenization of the ingredients contained therein.

Once mixing has been completed, the mixture obtained undergoes a refining step which is generally carried by means of a series of rolling mills.

Then the refined mixture normally undergoes a subsequent conching step which consists in mixing for very long periods of time the mixture of ingredients in special kneading machines with the further addition of one or more predefined amounts of cocoa butter.

The conching step is generally performed at a temperature sufficient for keeping the mixture in the liquid state during which the lumps of various ingredients are reduced in size in order to obtain a smooth and homogeneous mass.

At the end of the conching step, the chocolate obtained is kept in the melted state inside storage tanks at a temperature of between 45°C and 50°C.

Then the chocolate undergoes a tempering step during which crystallization of the cocoa butter is controlled so as to obtain a desired crystallization.

In particular, the mass of melted chocolate is firstly cooled in a controlled manner down to a temperature of about 27°C and then heated again to a temperature of between 29°C and 31°C and then cooled again until it is solidified.

The thermal shock affecting the product being prepared reduces significantly the unstable crystals of the cocoa butter, with the result that the chocolate has a shinier appearance and firmer consistency, as well as being easier to preserve.

Finally, the chocolate undergoes a moulding step performed by means of suitable moulds which are subjected to vibration in order to eliminate any air bubbles which have formed inside the mixture.

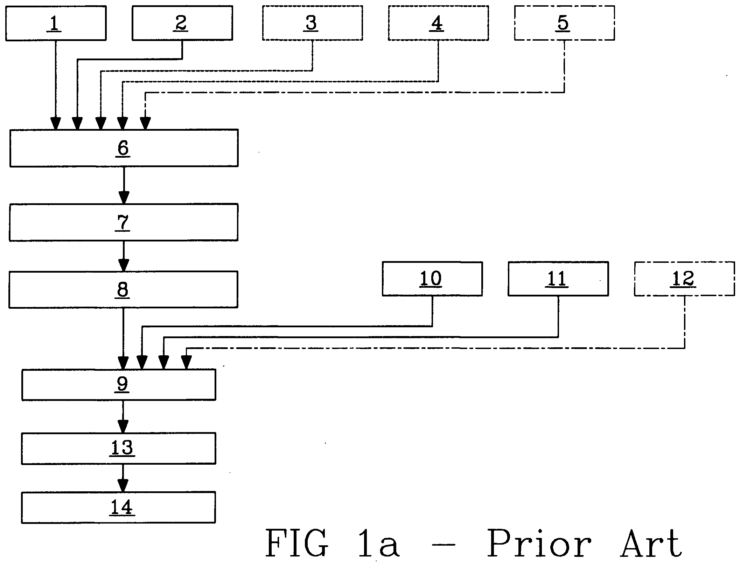

With particular reference to a known method, the steps and characteristic features of which are illustrated in the block diagram of Figure 1a, the manufacture of chocolate is at present performed based on a first step which involves preparation of the ingredients necessary for manufacturing the chocolate. The preparation of the ingredients varies naturally depending on the type of chocolate to be produced.

As can be seen in Figure 1a, at least two ingredients are normally prepared for continuous supplying during the method. A first ingredient 1 comprises cocoa butter, while a second ingredient 2 comprises sugar.

Depending on the variation in the type of chocolate to be produced it is possible to envisage further ingredients such as: a third ingredient 3 which comprises cocoa paste or cocoa powder. which are required for the preparation of dark chocolate or milk chocolate; a fourth ingredient 4 which comprises milk or powder milk, which are required for the manufacture of milk chocolate or white chocolate; and a fifth ingredient 5 which may comprise one or more flavourings necessary for differentiating between the various types of chocolate to be produced.

In order to ensure the correct dosage and the right proportions of the ingredients 1, 2, 3, 4, and 5 needed to prepare the respective chocolate to be produced, a step involving continuous or discontinuous weighing of these ingredients is performed by means of an appropriate supply station 6. In this way the correct proportions of the ingredients 1, 2, 3, 4 and 5 required are supplied to a following mixing station 7 where at least one, continuous or discontinuous, mixing step is performed in order to produce an unrefined fatty flour.

The unrefined fatty flour obtained from the mixing step is conveyed to one or more refining stations 8 which operate continuously and have the function of refining the sugar present in the fatty flour. The refining station 8 may comprises one or more stages depending on the degree of refinement of the sugar required.

Once the previously produced fatty flour has been refined, it undergoes a kneading or conching step performed in a special kneading station 9. In this station 9 further ingredients 10, 11, 12 are usually added to the refined fatty flour.

In particular, before or during the kneading step, a sixth ingredient 10 which comprises again the cocoa butter may be added to the refined fatty flour in order to make the latter more fluid.

A seventh ingredient 11 comprising lecithin may also be added during this step in order to ensure greater homogenization of the ingredients contained therein.

Finally, an eighth ingredient 12, which comprises further flavourings or solid food particles, may be added during the kneading step, in order to differentiate further the end product.

Following completion of kneading or conching, the mixture obtained during the kneading step is supplied to a following crystallization station 13 in order to undergo a tempering step during which, by means of successive variations in the temperature, it is possible to obtain controlled crystallization of the cocoa butter. The cocoa butter is thus prepared for the following solidification step which takes place, inside corresponding shaped moulds depending on the products to be made, within a suitable final solidification station 14.

Although the abovementioned method for manufacturing chocolate is widely used, the Applicant has noted that these methods are not without certain drawbacks and may be improved in certain respects, in particular with regard to the production time, the energy costs required for implementation of the method, the overall volume of the plants required for implementation of the method, the execution and repetition of a number of steps needed for refinement of the fatty flour, as well as hygienic and organoleptic preservation of the chocolate being produced. In particular, it has been found that the refinement step needed for reduction in size of the lumps and the sugar present in the fatty flour produced requires a significant amount of time and energy. Basically, the refinement step requires continuous rolling of the fatty flour which is repeated until the desired degree and quality of the product being produced is achieved.

It must also be considered that the volume of the refinement station, and consequently of the entire production plant, increases in proportion to the degree or the level of quality of the product being manufactured. In other words, the volume of the production plant depends exclusively on the number of stages of refinement which are required to achieve the finished product. Homogenization of the fatty paste obviously depends on the processing performed during refinement. Therefore, the better the degree of homogenization of the fatty flour, the greater are the dimensions and the volume of the refinement station and therefore of the plant. Obviously, the amount of time and energy required are strictly related to the number of refinement substeps which the fatty flour must undergo before the kneading step.

In addition, the lengthy steps for refinement of the fatty flour require storage thereof in special open storage tanks or transfer thereof on suitable conveyor belts. During this step, the fatty flour may come into contact with polluting substances and/or impurities which are present in the atmosphere surrounding the plant and which may adversely affect the aseptic condition, the quality and/or the organoleptic properties of the chocolate being produced.

The object of the present intention is to propose a method for manufacturing chocolate able to solve the problems encountered in the prior art.

Another object of the present invention is to propose a method for manufacturing chocolate which is fast.

A further object of the present invention is to devise a method for manufacturing chocolate which uses a small amount of energy.

Another object of the present invention is to eliminate the repetition of continuous steps for refinement of the fatty flour.

Moreover, it would be desirable to provide a process having a significant degree of flexibility as regards the products which can be obtained, with the possibility for different types of composition, these being difficult to obtain because of process requirements, in particular chocolate, or similar products such as chocolate-based creams, with a low or zero content of fats other than the cocoa butter, such as lecithins or other emulsifying agents, other vegetable or animal fats, or the like.

This object, together with other objects, is substantially achieved by a method for manufacturing chocolate in accordance with that stated in the accompanying claims. The present invention relates to a method for manufacturing chocolate or cocoa-based creams according to claim 1. The description of a method for manufacturing chocolate or cocoa-based creams is now described by way of example in the form of a preferred, but not exclusive embodiment of a corresponding chocolate manufacturing plant schematically shown in the accompanying figures in which:

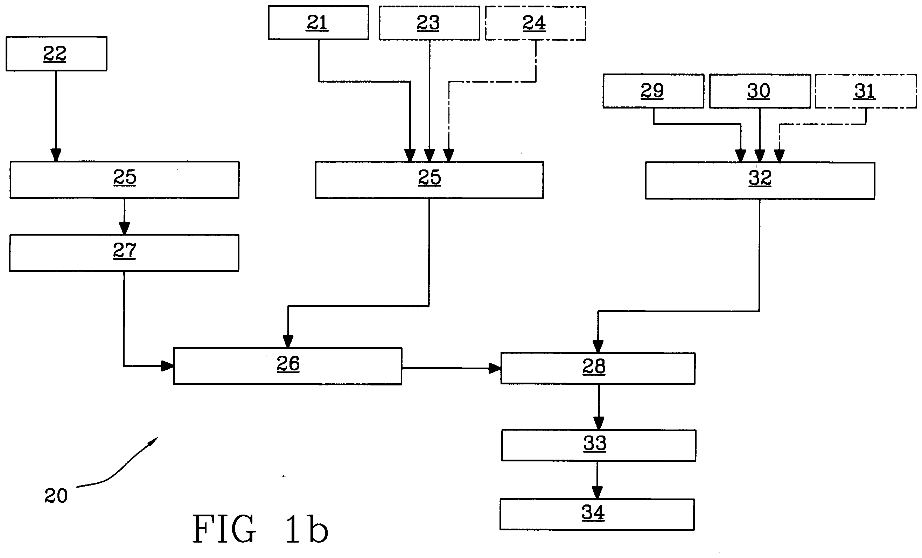

Figure 1b is a schematic representation of the plant and the steps of the method for manufacturing dark chocolate, in accordance with the present invention;

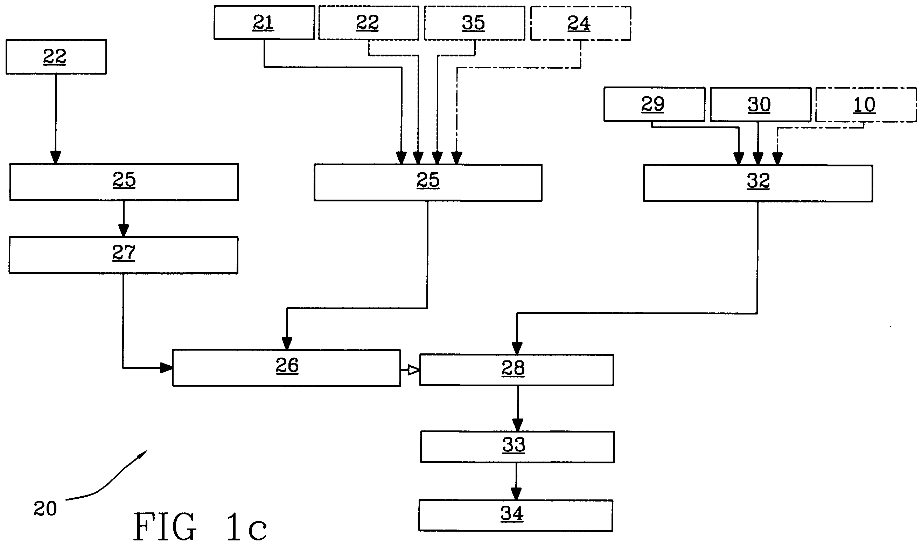

Figure 1c is a schematic representation of the plant and the steps of the method for manufacturing milk chocolate, in accordance with the present invention;

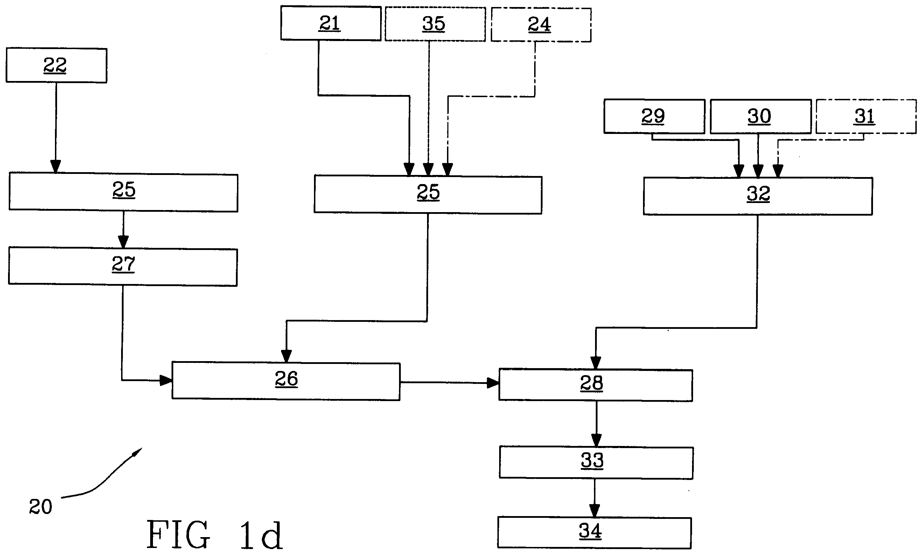

Figure 1d is a schematic representation of the plant and the steps of the method for manufacturing white chocolate, in accordance with the present invention.

With reference to Figures 1b, 1c and 1d, these show overall a block diagram representing a plant 20 for implementing the method for manufacturing chocolate, in accordance with the present invention.

With reference to Figure 1b, the method for manufacturing chocolate shown comprises a step for preparation of at least one first ingredient 21 which corresponds preferably to a predefined quantity of cocoa butter and a second ingredient 22 which corresponds to a predefined quantity of sugar.

With particular reference to the solution shown in Figure 1b, the preparation step comprises advantageously the preparation of a third ingredient 23 which corresponds to a predefined quantity of cocoa paste or powder and may also envisage the preparation of a fourth flavouring and/or sweetening ingredient 24, such as vanilla or the like.

In accordance with the diagram shown in Figure 1b, the method according to the present invention is intended for the manufacture of dark chocolate.

As shown in Figure 1b, the method for manufacturing chocolate comprises a step for supplying the ingredients 21, 22, 23, 24 which is advantageously performed by means of corresponding supply stations 25. These stations are able to provide, preferably continuously, predefined quantities of the first ingredient 21, second ingredient 22, third ingredient 23 and fourth ingredient 24.

In detail, the first ingredient 21, third ingredient 23 and fourth ingredient 24 are supplied by the respective supply station 25 directly to a mixing station 26, while the second ingredient 22, namely sugar, is supplied by the corresponding supply station 25 directly to a special refining station 27.

Even more specifically, supplying of the second ingredient 22 is performed in parallel with supplying of the first ingredient 21, third ingredient 23 and fourth ingredient 24 along two separate paths which meet inside the mixing station 26.

According to this configuration, the method envisages at least one step (grinding) the second ingredient 22 prior to the mixing step performed in the following mixing station 26.

Advantageously, refinement is carried out continuously only on the second ingredient 22 without involving any other ingredient 21, 23, 24 necessary for implementing the method.

According to a preferred aspect of the present invention, the step of refining the second ingredient 22 is performed at room temperature, preferably at a temperature of between 0°C and 40°C.

Advantageously, refinement of the second ingredient 22 is performed until particles which have a particle size not greater than 100 microns, and more preferably not greater than 50 microns, are obtained.

The particle size and the particle size distribution are fundamental for determining the degree or level of quality of the chocolate being produced, which may vary from an unrefined quality to a refined quality; in particular, it has been found that a small particle size distribution is very advantageous for obtaining high-quality products which have optimum organoleptic properties and are pleasing to the palate, even in small quantities or in the absence of components such as emulsifying agents or additional fats used for adjusting the viscosity of the mass being processed. Continuous refinement, preferably using the methods indicated below, is essential for ensuring such particle sizes and distribution, which cannot be achieved with the milling processes commonly used, such that the most widely used processes envisage refinement together with other ingredients, in order to overcome the mixing problems arising therefrom.

Advantageously, refining of the sugar (second ingredient 22) is performed by means of a continuous refiner 27 via which it is possible to adjust the degree of refinement, i.e. the maximum size limit of the particles being refined.

More particularly, by means of the refinement step according to the present invention it is possible to obtain mixed particles, the dimensions of which may vary between the predefined minimum limit and maximum limit.

In order to obtain highly refined chocolate it is preferable for it to be obtained by means of a constant and homogeneous distribution of the mixed particles, up to 50 microns. According to a preferred aspect, the particle size distribution is such that at least 90% of the particles of the second ingredient have an equivalent diameter of between 25 and 40 µm; according to a further preferred aspect, at least 5% of the particles have an equivalent diameter of between 10 and 25 µm. As mentioned, the second ingredient preferably consists of sugar alone.

Preferably, refining of the second ingredient 22 is performed by means of a refiner 27 which has an internal volume for containing the material being processed up to 60 litres. The average stay times are preferably less than 10 s, and more preferably range from 1 to 8 s, and for example may be around 1.5 s.

The station 25 supplying the second ingredient 22, which preferably comprises a suitable metering device, allows and determines a constant rate of supply of the sugar to the refiner 27. The second ingredient 22 is thus continuously centrifuged tangentially inside a corresponding cylindrical casing at high and preferably constant operating speeds. In this way, the second ingredient 22 is also caused to advance along this casing while its particles are crushed and pulverized. Crushing of the particles is also assisted by the friction acting on them during centrifuging thereof.

The refiner is preferably of the type comprising a shaft with a series of pins, preferably horizontal, so as to distribute by means of centrifuging the material in a layer against the casing; in particular, in the space between the casing and ends of the pins, owing to the high speed, friction is generated between the particles causing them to be reduced to the desired dimensions, this being able to be easily controlled by adjusting the speeds of rotation and the stay times. Owing to the short stay times made possible by the efficiency of the method, it is possible to obtain a small particle size distribution and reduce the danger associated with the potentially explosive nature of the powders, considering the small volume of the machinery and the fact that the ingredient may be immediately mixed with the other ingredients without the need for storage, as a result of the continuous process. The speed of rotation of the shaft is very high, preferably between 8,000 and 20,000 rpm.

A possible example of the machinery which can be used is that resembling the mixer forming the subject of patent application IT MI2004A001906, modified so as to be able to operate at the speed indicated above, where the friction may produce an efficient reduction in the particle size.

Once the desired refinement of the second ingredient 22 has been obtained, the latter is supplied to the mixing station 26 where it is suitably mixed with the first ingredient 21, third ingredient 23 and fourth ingredient 24. Mixing of the ingredients 21, 23, 24 supplied directly by the supply station 25 and the second ingredient 22 supplied by the refining station 27 produces a mixture which is transferred to a kneading station 28. In this station, the method envisages a step for kneading the mixture prepared so as to make the latter more fluid and homogeneous.

In order to fluidify and homogenize the mixture supplied by the mixing station 26, kneading envisages the addition and mixing of further ingredients 29, 30. In particular, a sixth ingredient 29, corresponding to a predefined quantity of cocoa butter, and a seventh ingredient 30, corresponding to a predefined quantity of lecithin, are supplied into the kneading station 28.

During this step it is also possible to add an eighth ingredient 31, which may comprise further flavourings and/or solid food particles, such as shredded nut, puffed rice, granulated fruit and the like.

Obviously the abovementioned ingredients are supplied, by means of one or more auxiliary supply stations 32, directly to the kneading station 28 where they are suitably blended with the previously prepared mixture.

Following kneading of the mixture, the method envisages a tempering step which can be performed in a corresponding tempering station 33 and by means of which a controlled crystallization of the cocoa butter contained in the processed product is achieved.

Advantageously, according to a known cooling, heating and subsequent cooling process, the cocoa butter is crystallized according to a desired structure, so that it does not rise to the surface once solidified.

The method terminates in a solidification step, performed in a suitable cooling station 34, where the previously treated chocolate assumes a solid form corresponding to the shape of the moulds used.

Once solidification has been performed, the solid chocolate is subsequently packaged ready for marketing.

In accordance with the diagrams shown in Figures 1c and 1d, the method comprises the same steps described for the manufacture of dark chocolate (Figure 1b), except for the preparation of the starting ingredients.

In particular, when the method is intended to produce milk chocolate (Figure 1c) the step of preparing the ingredients 21, 23, 24, 35 to be supplied directly to the mixing station 26 comprises also the preparation of a fifth ingredient 35 which corresponds to a predefined quantity of milk or powder milk, not envisaged for the production of dark chocolate.

In this case also, refining of the sugar is advantageously performed separately from supplying of all the other ingredients 21, 23, 24, 35 which are to be subsequently mixed with the latter.

When the method is intended for the manufacture of white chocolate (Figure ld), the step of preparing the ingredients 21, 23, 35 to be supplied directly to the mixing station 26 also comprises the preparation of the fifth ingredient 35, but excludes the preparation of the third ingredient 23, namely the cocoa paste.

In a similar way to the identical sequence of the series of steps to be performed in order to implement the entire method, the plant 20, by means of which these steps are performed, remains unvaried, irrespective as to the type of chocolate produced.

The method according to the present invention solves the problems encountered in the prior art and achieves important advantages.

Firstly, with the method according to the present invention it is possible to perform refinement solely of the sugar without involving in any way the other starting ingredients which are mixed with it at a later stage.

The separate refinement of the sugar results in various advantages including the elimination of the voluminous part of the plant design needed for the refinement of fatty flours as well as the reduction in the time needed to form the mixture ready for kneading.

More particularly, the direct refinement of the sugar prior to the mixing step results in rapid reduction in the size of the sugar particles, thus resulting in the subsequent step of mixing of the ingredients being performed more rapidly and quickly.

It must also be considered that, owing to the separate refinement of the sugar as well as the elimination of long and repetitive steps for refinement of the fatty flour, the amount of energy used during the entire process is reduced significantly.

Finally, it should be noted that, owing to elimination of the fatty flour refinement steps, the chocolate being produced may be treated in antiseptic and hygienically protected environments. In particular, both refinement of the sugar and the subsequent mixing, kneading and tempering steps, may be performed in closed environments which are not subject to the impurities present in the surrounding atmosphere.

The method, as mentioned, is applicable to the manufacture of chocolate, but may also be used advantageously for similar cocoa-based products, such as creams, in particular creams of the type which can be spread and contain sugar and cocoa butter.

## Claims

1. Method for manufacturing chocolate or cocoa-based creams, comprising:
- a step for preparing at least cocoa butter and sugar;
- a step for mixing said cocoa butter and sugar (21, 22) so as to obtain a mixture;
- a kneading step;
- a tempering step for controlled crystallization of the said cocoa butter;
- a solidification step during which the chocolate assumes a solid form;
- at least one step for grinding said sugar (22), carried out prior to the step for mixing said cocoa butter and sugar (21, 22) and performed continuously;
**characterized in that** the step for grinding said sugar (22) is performed by means of a grinder (27) comprising a centrifugation cylindrical casing and a grinding shaft with a series of pins, so as to distribute by means of centrifugation the material in a layer against said cylindrical casing; said grinding step being carried out by rotating said grinding shaft at speeds between 8000 and 20000 rpm.

2. Method according to Claim 1, wherein the stay time inside the grinder is less than 10 s, in particular is between 1 and 8 s.

3. Method according to any one of the preceding claims, wherein the step of grinding said sugar (22) is performed at room temperature, preferably at a temperature of between 0° and 40°C.

4. Method according to any one of the preceding claims, wherein the step of grinding said sugar (22) is performed until particles with a particle size not greater than 100 microns, and in particular not greater than 50 microns, are obtained.

5. Method according to Claim 4, wherein the particle size distribution of the sugar after the grinding step is such that at least 90% of the particles of the sugar have an equivalent diameter of between 25 and 40 µm.

6. Method according to Claim 4 or 5, wherein the particle size distribution of the sugar after the grinding step is such that at least 5% of the particles have an equivalent diameter of between 10 and 25 µm.

7. Method according to any one of the preceding claims, wherein pure sugar undergoes said grinding step.

8. Method according to any one of the preceding claims, wherein the preparation step also comprises the preparation of cocoa paste (23), a further flavourings (24) and/or milk (35).

9. Method according to Claim 8, wherein said cocoa butter (21), said cocoa paste (23), said further flavourings (24) and said milk (35) are directly fed to a mixing station (26), depending on the type of chocolate to be produced, during the mixing step, while said sugar (22) is used during said mixing step after the grinding step.

10. Method according to Claim 8 or 9, wherein, during the kneading step, further cocoa butter (29) and/or a lecithin (30) and/or one or more flavourings (31) are added to and mixed with said mixture.

## Patentansprüche

1. Verfahren zur Herstellung von Schokolade oder auf Kakao basierenden Cremes, das aufweist:
einen Schritt zur Bereitstellung zumindest von Kakaobutter und Zucker;
einen Schritt zum Mischen der Kakaobutter und des Zuckers (21, 22), um eine Mischung zu erhalten;
einen Knetschritt;
einen Temperierschritt zur kontrollierten Kristallisation der Kakaobutter;
einen Verfestigungsschritt, während dem die Schokolade eine feste Form annimmt;
mindestens einen Schritt zum Mahlen des Zuckers (22), der vor dem Schritt des Mischens der Kakaobutter und des Zuckers (21, 22) ausgeführt und kontinuierlich durchgeführt wird;
**dadurch gekennzeichnet, dass**
der Schritt zum Mahlen des Zuckers (22) mittels eines Mahlwerks (27) durchgeführt wird, das ein zylindrisches Zentrifugiergehäuse und eine Mahlwelle mit einer Reihe von Pins aufweist, um die Masse mittels Zentrifugierens in einer Schicht gegen das zylindrische Gehäuse zu verteilen; wobei der Mahlschritt durch Rotieren der Mahlwelle mit Geschwindigkeiten zwischen 8.000 und 20.000 U/min ausgeführt wird.

2. Verfahren nach Anspruch 1, bei dem die Verweildauer im Mahlwerk weniger als 10 s, insbesondere zwischen 1 und 8 s, beträgt.

3. Verfahren nach einem der vorigen Ansprüche, bei dem der Schritt des Mahlens des Zuckers (22) bei Raumtemperatur, vorzugsweise bei einer Temperatur zwischen 0° und 40°C, durchgeführt wird.

4. Verfahren nach einem der vorigen Ansprüche, bei dem der Schritt des Mahlens des Zuckers (22) durchgeführt wird, bis Teilchen mit einer Teilchengröße von nicht mehr als 100 µm, insbesondere nicht mehr als 50 µm, erhalten werden.

5. Verfahren nach Anspruch 4, bei dem die Teilchengrößenverteilung des Zuckers nach dem Mahlschritt derart ist, dass mindestens 90% der Teilchen des Zuckers einen Äquivalentdurchmesser zwischen 25 und 40 µm aufweisen.

6. Verfahren nach Anspruch 4 oder 5, bei dem die Teilchengrößenverteilung des Zuckers nach dem Mahlschritt derart ist, dass mindestens 5% der Teilchen einen Äquivalentdurchmesser zwischen 10 und 25 µm aufweisen.

7. Verfahren nach einem der vorigen Ansprüche, bei dem reiner Zucker dem Mahlschritt unterzogen wird.

8. Verfahren nach einem der vorigen Ansprüche, bei dem der Bereitstellungsschritt ferner die Bereitstellung von Kakaopaste (23), eines weiteren Aromastoffs (24) und/oder Milch (35) umfasst.

9. Verfahren nach Anspruch 8, bei dem die Kakaobutter (21), die Kakaopaste (23), die weiteren Aromastoffe (24) und die Milch (35) in Abhängigkeit von der Art der herzustellenden Schokolade während des Mischschritts direkt einer Mischstation (26) zugeführt werden, wobei der Zucker (22) während des Mischschritts nach dem Mahlschritt verwendet wird.

10. Verfahren nach Anspruch 8 oder 9, bei dem während des Knetschrittes ferner Kakaobutter (29) und/oder ein Lecithin (30) und/oder ein oder mehrere Aromastoffe (31) der Mischung hinzugegeben und mit dieser vermischt werden.

## Revendications

1. Procédé de fabrication de crèmes à base de chocolat ou de cacao, comprenant :
- une étape de préparation d'au moins du beurre de cacao et du sucre ;
- une étape de mélange dudit beurre de cacao et du sucre (21, 22) de manière à obtenir un mélange ;
- une étape de malaxage ;
- une étape de tempérage pour une cristallisation contrôlée dudit beurre de cacao ;
- une étape de solidification au cours de laquelle le chocolat prend une forme solide ;
- au moins une étape de broyage dudit sucre (22), effectuée préalablement à l'étape de mélange dudit beurre de cacao et du sucre (21, 22) et réalisée en continu ;
**caractérisé en ce que** l'étape de broyage dudit sucre (22) est réalisée au moyen d'un broyeur (27) comprenant un boîtier cylindrique de centrifugation et un arbre de broyage avec une série de broches, de manière à répartir par centrifugation le matériau dans une couche contre ledit boîtier cylindrique ; ladite étape de broyage étant effectuée en faisant tourner ledit arbre de broyage à des vitesses comprises entre 8000 et 20 000 tr/min.

2. Procédé selon la revendication 1, dans lequel le temps de séjour à l'intérieur du broyeur est inférieur à 10 s, en particulier est compris entre 1 et 8 s.

3. Procédé selon l'une quelconque des revendications précédentes, dans lequel l'étape de broyage dudit sucre (22) est réalisée à température ambiante, de préférence à une température comprise entre 0 et 40°C.

4. Procédé selon l'une quelconque des revendications précédentes, dans lequel l'étape de broyage dudit sucre (22) est réalisée jusqu'à l'obtention de particules ayant une dimension de particules non supérieure à 100 microns, et en particulier non supérieure à 50 microns.

5. Procédé selon la revendication 4, dans lequel la distribution granulométrique du sucre après l'étape de broyage est telle qu'au moins 90 % des particules du sucre ont un diamètre équivalent compris entre 25 et 40 µm.

6. Procédé selon la revendication 4 ou 5, dans lequel la distribution granulométrique du sucre après l'étape de broyage est telle qu'au moins 5 % des particules ont un diamètre équivalent compris entre 10 et 25 µm.

7. Procédé selon l'une quelconque des revendications précédentes, dans lequel du sucre pur subit ladite étape de broyage.

8. Procédé selon l'une quelconque des revendications précédentes, dans lequel l'étape de préparation comprend également la préparation d'une pâte de cacao (23), d'autres arômes (24) et/ou du lait (35).

9. Procédé selon la revendication 8, dans lequel ledit beurre de cacao (21), ladite pâte de cacao (23), lesdits autres arômes (24) et ledit lait (35) sont introduits directement dans une station de mélange (26), en fonction du type de chocolat devant être produit, pendant l'étape de mélange, alors que ledit sucre (22) est utilisé pendant ladite étape de mélange après l'étape de broyage.

10. Procédé selon la revendication 8 ou 9, dans lequel, pendant l'étape de malaxage, du beurre de cacao supplémentaire (29) et/ou de la lécithine (30) et/ou un ou plusieurs arômes (31) sont ajoutés audit mélange et mélangés avec celui-ci.
